# EUROPEAN PATENT SPECIFICATION

(11) **EP 1 994 776 B1**
(45) Date of publication and mention of the grant of the patent: **29.08.2018**
(21) Application number: 07717793.9
(22) Date of filing: 11.01.2007
(51) Int. Cl.: H04J 3/26, H04W 40/08, H04W 40/10, H04W 4/18, H04W 8/26, H04W 24/08, H04W 16/18

(54) **VISUAL MAPPING OF FIELD DEVICE MESSAGE ROUTES IN A WIRELESS MESH NETWORK**
VISUELLE ABBILDUNG VON NACHRICHTENSTRECKEN EINES FELDGERÄTS IN EINEM DRAHTLOSEN MASCHENNETZ
CARTOGRAPHIE VISUELLE DE TRAJECTOIRES DE MESSAGES DE DISPOSITIF DE TERRAIN, DANS UN RÉSEAU MAILLÉ SANS FIL

(30) Priority: 11.01.2006 US 758167 P
(43) Date of publication of application: 26.11.2008
(73) Proprietor: Fisher-Rosemount Systems, Inc., Austin, Texas 78759-2369 (US)
(72) Inventor: DOBROWSKI, Patrick M., Austin, Texas 78759-2369 (US); LOVEGREN, Eric R., Austin, Texas 78759-2369 (US); ORTH, Kelly M., Austin, Texas 78759-2369 (US); STOTZ, Kyle L., Austin, Texas 78759-2369 (US)
(74) Representative: Elsworth, Dominic Stephen
(86) International application number: PCT/US2007/000678
(87) International publication number: WO 2007/082011

(56) References cited:
- EP-A1- 1 107 512
- WO-A1-02/10942
- WO-A1-93/15591
- WO-A1-03/098447
- WO-A2-2004/066077
- US-A1- 2002 129 138
- US-A1- 2004 001 084
- US-A1- 2004 259 555
- US-A1- 2005 164 684
- US-A1- 2005 192 727

## Description

### BACKGROUND OF THE INVENTION

The present invention relates to wireless networks. In particular, the invention relates to a wireless mesh network in which process control messages are communicated between a host and field devices at nodes of the wireless mesh network.

In many industrial settings, control systems are used to monitor and control inventories, processes, and the like. Often, such control systems have a centralized control room with a host computer that communicates with field devices that are separated or geographically removed from the control room.

Generally, each field device includes a transducer, which may generate an output signal based on a physical input or generate a physical output based on an input signal. Types of transducers used in field devices include various analytical equipment, pressure sensors, thermistors, thermocouples, strain gauges, flow sensors, positioners, actuators, solenoids, indicators, and the like.

Traditionally, analog field devices have been connected to the process subsystem and the control room by two-wire twisted-pair current loops, with each device connected to the control room by a single two-wire twisted pair loop. Typically, a voltage differential is maintained between the two wires of approximately 20 to 25 volts, and a current between 4 and 20 milliamps (mA) runs through the loop. An analog field device transmits a signal to the control room by modulating the current running through the current loop to a current proportional to the sensed process variable. An analog field device that performs an action under the control of the control room is controlled by the magnitude of the current through the loop, which is modulated by the ports of the process subsystem under the control of the controller.

While historically field devices were capable of performing only one function, more recently hybrid systems that superimpose digital data on the current loop have been used in distributed control systems. The Highway Addressable Remote Transducer (HART) superimposes a digital carrier signal on the current loop signal. The digital carrier signal can be used to send secondary and diagnostic information. Examples of information provided over the carrier signal include secondary process variables, diagnostic information (such as sensor diagnostics, device diagnostics, wiring diagnostics, process diagnostics, and the like), operating temperatures, sensor temperature, calibration data, device ID numbers, configuration information, and so on. Accordingly, a single field device may have a variety of input and output variables and may implement a variety of functions.

Another approach uses a digital communication bus to connect multiple field devices to the host in the control room. Examples of digital communication protocols used with field devices connected to a digital bus include Foundation Fieldbus, Profibus, Modbus, and DeviceNet. Two way digital communication of messages between a host computer and multiple field devices can be provided over the same two-wire path that supplies power to the field devices.

Typically, remote applications have been added to a control system by running very long homerun cables from the control room to the remote application. If the remote application is, for example, a half of a mile away, the costs involved in running such a long cable can be high. If multiple homerun cables have to be run to the remote application, the costs become even higher. Wireless communication offers a desirable alternative, and wireless mesh networks have been proposed for use in industrial process control systems. However, to minimize costs, it is also desirable to maintain existing control systems and communication protocols, to reduce the costs associated with changing existing systems to accommodate the wireless communication.

In wireless mesh network systems designed for low power sensor/actuator-based applications, many devices in the network must be powered by long-life batteries or by low power energy-scavenging power sources. Power outlets, such as 120VAC utilities, are typically not located nearby or may not be allowed into the hazardous areas where the instrumentation (sensors) and actuators must be located without incurring great installation expense. The need for low installation cost drives the need for battery-powered devices communicating as part of a wireless mesh network. Effective utilization of a limited power source, such as a primary cell battery which cannot be recharged, is vital for a well functioning wireless device. Batteries are expected to last more than 5 years and preferably as long as the life of the product.

In a true wireless mesh network, each node must be capable of routing messages for itself as well as other nodes in the mesh network. The concept of messages hopping from node to node through the network is beneficial because lower power RF radios can be used, and yet the mesh network can span a significant physical area delivering messages from one end to the other. High power radios are not needed in a mesh network, in contrast a point-to-point system which employs remote nodes talking directly to a centralized base-station.

A mesh network protocol allows for the formation of alternate paths for messaging between nodes and between nodes and a data collector, or a bridge or gateway to some higher level higher-speed data bus. Having alternate, redundant paths for wireless messages enhances data reliability by ensuring there is at least one alternate path for messages to flow even if another path gets blocked or degrades due to environmental influences or due to interference.

Some mesh network protocols are deterministically routed such that every node has an assigned parent and at least one alternate parent. In the hierarchy of the mesh network, much as in a human family, parents have children, children have grandchildren, and so on. Each node relays the messages for their descendants through the network to some final destination such as a gateway. The parenting nodes may be battery-powered or limited-energy powered devices. The more descendants a node has, the more traffic it must route, which in turn directly increases its own power consumption and diminishes its battery life.

WO 02/10942 describes a system and method employing one or more portable hand held computers with one or more servers, for portable design, deployment, test, optimization of a communications network.

WO03/098447 describes a system and method for creating a graphical view of a network from a nodes perspective.

WO2004/066077 describes a system and method for automated placement or configuration of equipment for obtaining desired network performance objectives.

EP1843521 describes a performance analysis apparatus and method for a communication network.

US6052565 describes a mobile communication terminal apparatus with a data communication function.

### BRIEF SUMMARY OF THE INVENTION

Performance of a wireless mesh network having a plurality of nodes can be assessed using a visual representation of the network that shows graphically the positions of the nodes and links between nodes used to route messages through the mesh network. The visual representation is based upon positional information relating to the nodes and network performance parameters that are collected from the nodes.

Network performance parameters can include, for example, identification of other nodes with which a particular node has established communication links, radio signal strength on each of the links, number of lost messages or other errors on each link, and how often communication occurs on each of the links. The visual representation allows the user to inspect the communication paths within the mesh network to identify potential problems and to make adjustments to the network to improve communication performance.

According to one aspect of the invention there is provided a method of monitoring operation of a wireless mesh network as specified in Claim 1.

According to another aspect of the invention there is provided a system as specified in Claim 5.

### BRIEF DESCRIPTION OF THE INVENTION

FIG. 1 is a diagram illustrating a control system in which a wireless mesh network routes wireless messages between a host and field devices.
FIG. 2 is a flow chart of a method of providing a graphical visualization of message routing and network performance of a wireless mesh network.
FIGS. 3A and 3B are a visual network map of the wireless mesh network of FIG. 1, formed using positional information and performance statistics obtained from nodes of the wireless network at different times.
FIGS. 4-6 show alternative visual network maps.

### DETAILED DESCRIPTION

This invention provides a method for graphically visualizing the route a message takes as it passes between nodes in a wireless mesh network. In a typical control system, a host computer at a control center interacts with field devices located within a physical plant and displays information they have to offer. The communication of messages between the host computer and the field devices can be over wired connections or over a wireless mesh network. In a low power wireless mesh network, a device message does not pass from the host to the target field device directly; it can take a multitude of routes within the wireless mesh network before reaching its destination. In practice, it is desirable to understand the routes messages take through the wireless mesh network so that the topology of the physical network can be adjusted if needed to enable the network to communicate in a more desirable way. Presently there is no way for a qualified person to inspect the dynamic nature of the wireless mesh network and see this type of information so that adjustments could be made or potential problems identified. This invention is a graphical method to display the routes field device messages take as they travel through a wireless mesh network on their way to their destinations. The user can be provided a visual representation of the wireless network (i.e. a visual network map) in which each node of the network is represented by an icon. Lines are drawn interconnecting the icons that represent the communication links between wireless nodes. The graphical display can be dynamic in nature, in that the paths through the network will be updated in real time based upon network performance data collected from the nodes.

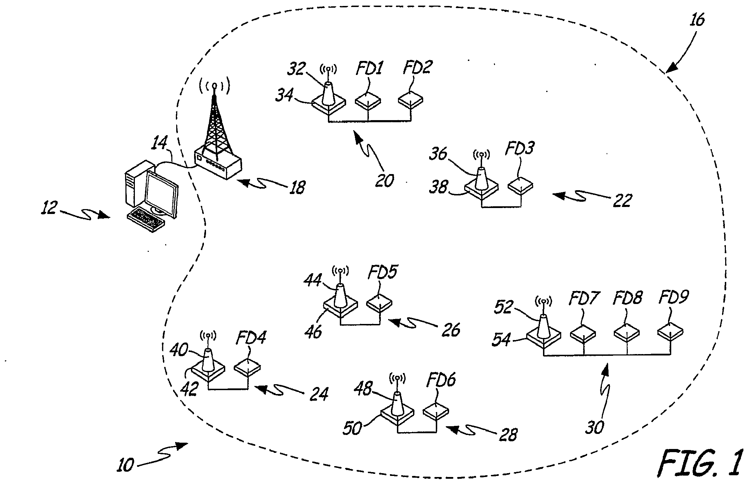

FIG. 1 shows control system 10, which is an example of a system in which the visual mapping of signal routing in a wireless network can be used. Control system 10 includes host computer 12, highspeed network 14, and wireless mesh network 16, which includes gateway 18 and wireless nodes 20, 22, 24, 26, 28, and 30. Gateway 18 interfaces mesh network 16 with host computer 12 over highspeed network 14. Messages may be transmitted from host computer 12 to gateway 18 over network 14, and are then transmitted to a selected node of mesh network 16 over one of several different paths. Similarly, messages from individual nodes of mesh network 16 are routed through mesh network 16 from node-to-node over one of several paths until they arrive at gateway 18 and are then transmitted to host 12 over highspeed network 14.

Control system 10 can make use of field devices that have been designed for and used in wired distributed control systems, as well as field devices that are specially designed as wireless transmitters for use in wireless mesh networks. Nodes 20, 22, 24, 26, 28, and 30 show examples of wireless nodes that include conventional field devices.

Wireless node 20 includes radio 32, wireless device router (WDR) 34, and field devices FD1 and FD2. Node 20 is an example of a node having one unique wireless address and two unique field device addresses.

Nodes 22, 24, 26, and 28 are each examples showing nodes having one unique wireless address and one unique field device address. Node 22 includes radio 36, WDR 38, and field device FD3. Similarly, field device 24 includes radio 40, WDR 42, and field device FD4; node 26 includes radio 44, WDR 46, and field device FD5, and node 28 includes radio 48, WDR 50, and field device FD6.

Node 30 has one unique wireless address and three unique field device addresses. It includes radio 52, WDR 54, and field devices FD7, FD8, and FD9.

Wireless network 16 is preferably a low power network in which many of the nodes are powered by long life batteries or low power energy scavenging power sources. Communication over wireless network 16 may be provided according to a mesh network configuration, in which messages are transmitted from node-to-node through network 16. This allows the use of lower power RF radios, while allowing the network 16 to span a significant physical area to deliver messages from one end of the network to the other.

In control system 10, host computer 12 interacts with field devices FD1-FD9, and displays information contained in messages received from field devices FD1-FD9. In wireless mesh network 16, messages from host computer 12 to field devices FD1-FD9, and messages from field devices FD1-FD9 back to host computer 12 can take multiple routes through network 16 before reaching a final destination. FIG. 1 shows a simplified system, with only six wireless nodes 20-30; it is possible, however, for wireless mesh network 16 to have many more nodes, and therefore many more potential routes for messages to travel.

In practice, it is desirable to understand the routes that messages take through a wireless mesh network, so that that the topology of the physical network can be adjusted if needed to enable to the wireless mesh network to communicate effectively. In the past, users have not been provided with an ability to inspect the dynamic nature of a wireless mesh network in order to identify strengths and weaknesses of the network, to diagnose and troubleshoot problems within the network, to detect changes in network performance that may be caused by damage to one or more nodes, or to detect changes in performance due to changes in the physical plant in which the network operates that can introduce new sources of interference to wireless links between nodes.

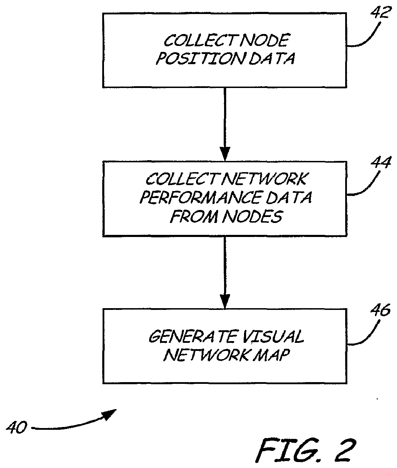

Method 40, illustrated in FIG. 2, provides a tool by which the user can assess performance of a wireless mesh network in order to identify potential problems and to take corrective action. Using positional information indicating the location of each node (step 42) and performance information gathered from each node (step 44), a visual representation of the wireless network is generated (step 46). This visual representation can be a visual network map in which each node of the network is represented by an icon. Lines can be drawn between icons to represent communication activity between the nodes. Other network performance parameters can also be displayed as part of the map, such as received radio signal strength on each link, error rate over particular links, and the amount of activity occurring over each link.

The generation of a visual representation of the network makes use of positional information relating to the nodes in order to provide a physical layout of the topology of the wireless network. The positional information can be gathered during installation of the wireless network. The installer can provide positional information of each node that is installed. The positional information can be in the form of GPS coordinates, or can be defined by relative position of the node to other structures within an actual plant layout. Alternatively, some or all of the nodes can include embedded GPS sensors, so that the GPS coordinates of the node can be provided as part of messages sent over the wireless mesh network. Still another alternative is to establish positional information for certain nodes within the wireless mesh network, and then use triangulation techniques in order to derive the location of other nodes.

The position data is collected and stored in a database. When new nodes are added to the network, or existing nodes are moved, the position information must be updated in order for the positions of the nodes to be accurately portrayed in a visual network map.

The positional information allows a visual network map to accurately show the relative positions of the nodes of the wireless mesh network. In addition, the positional information can be used to map the nodes of the network on to an image of the actual plant layout. This can be used to show relative location of the nodes to other physical objects in the plant, which may for example, interfere with communication between particular nodes.

When control system 10 is first initialized, network performance data is collected from each node. For a given node, the performance data includes an identification of the nodes with which the given node has established communication links. The performance data may also include the number of transmissions occurring over each established link, how many errors have occurred over each link, and the signal strength of received signals over each link.

This performance data is reported in messages sent to gateway 18 and may be stored at gateway 18, or sent on to host computer 12. In either case, as performance data is collected from each node, the visual network map can be built up using that data. Once data has been collected from all nodes, a complete map can be displayed.

In the simplest form, the visual network map shows the physical location of each node, and the links established by that node with neighboring nodes. By viewing the nodes and the links, the pathways over which messages are routed to a particular node (and the field device located at that node) can be determined.

As the network continues to operate, performance data is collected so that the visual network map can be updated dynamically. The collection of performance data from the nodes can occur at regularly scheduled times, or can be performed on demand in response to a command sent to each of the nodes from gateway 18. The on-demand collection of data may be initiated by a user interacting with host computer 12.

The display of visual network maps occurs at host computer 12, although the display can occur at other locations as well. An application program running on host computer 12 uses the stored positional information and network performance data to create a visual network map in one of several different formats, as requested by a user. As new data is gathered from wireless network 16, the application dynamically redraws visual network maps by host computer 12.

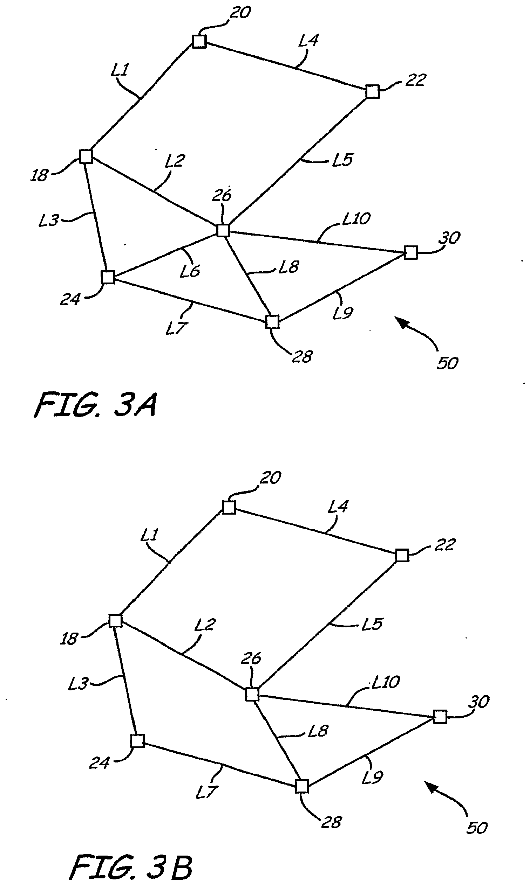

FIG. 3A shows visual network map 50, which represents operation of wireless mesh network 16 at a first time. In this example, visual network map 50 shows each node 20-30 as a square block. Established communication links L1-L10 between the various nodes 20-30 are represented by straight lines between nodes.

In this particular example, other performance data, such as error rates, signal strengths, or frequency of use of a link are not shown on map 50. However, other versions of the visual network map can provide that information in various graphical forms. In addition, visual network map 50 may include capability of a user moving an arrow or cursor to select a particular link. When a particular link is selected, a display of performance data specific to that link can be provided. Similarly, selection of a particular node can result in a display of network performance information associated with that node. In addition to the data discussed above, other parameters relating to operation of the nodes can be displayed. For example, battery life at each node could be checked as part of a visual inspection of the network using the display.

FIG. 3B shows visual network map 50 at a later time, at which communication between nodes 24 and 26 is no longer occurring. Link L6 (shown in FIG. 3A) is not present in FIG. 3B. This may be the result of damage or malfunction at one or the other of the nodes, or by the introduction of a new source of interference, such as a new piece of equipment, within the plant where network 16 is installed. By monitoring changes in the links shown in visual network map 50, a user can identify a potential problem, and determine what corrective action, if any, is necessary. For example, the addition of another node in the vicinity may provide an alternative path to replace the link that no longer exists directly between nodes 24 and 26. Alternatively, one of the nodes may need to be repositioned in order to reestablish the link.

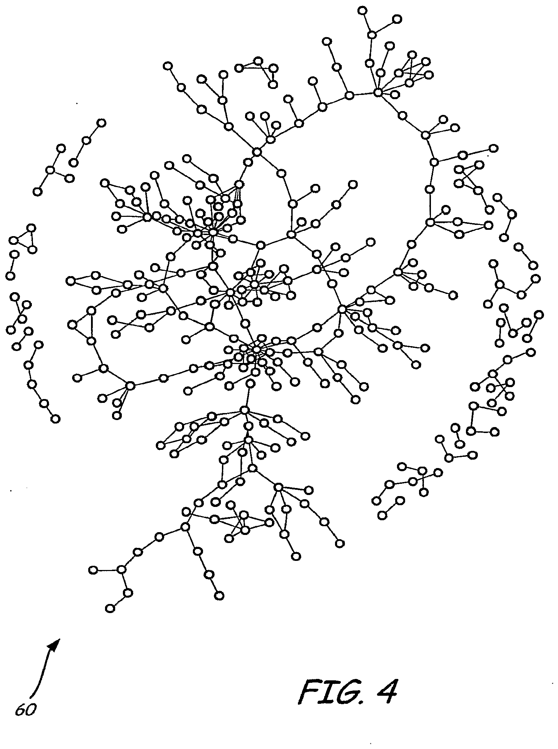

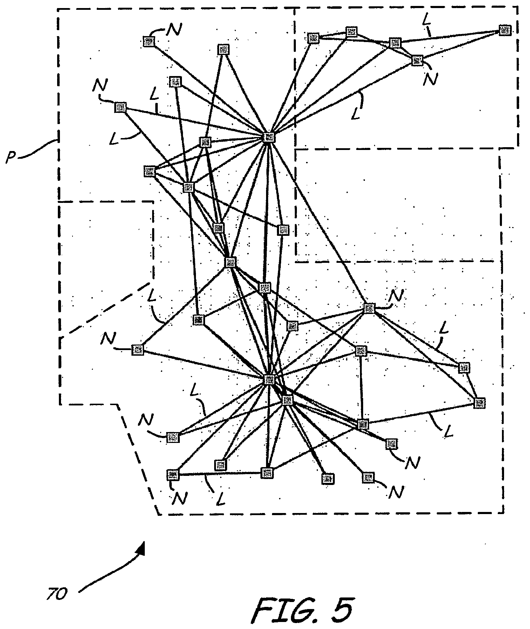

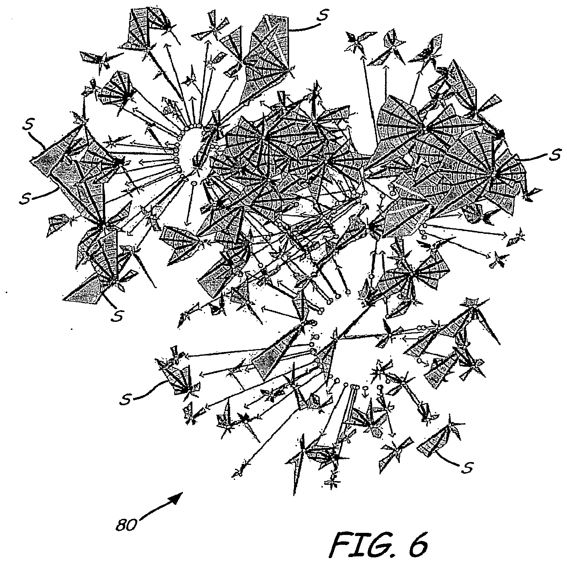

FIGS. 4-6 show other display formats and different numbers of nodes. In FIG. 4, visual network map 60 includes a large number of nodes N and links L are shown for a system much larger than control system 10 of FIGS. 1, 3A and 3B. Multiple wireless networks are shown in map 60. FIG. 5 illustrates visual network map 70, which includes nodes N and links L superimposed on plant layout P. In FIG. 6, signal strength charts S are shown as part of map 80. A wide variety of display formats, using different network performance data, is available to provide the user with information needed to assess the performance of the wireless mesh network.

## Claims

1. A method of monitoring operation of a wireless mesh network (16) having a plurality of nodes (20, 22, 24, 26, 28, 30) interconnected by a plurality of assigned message links (LI to L10), the method comprising:
collecting positional information (42) relating to each of the nodes (20, 22, 24, 26, 28, 30);
collecting network performance data (44) reported by each of the nodes (20, 22, 24, 26, 28, 30); and
generating a visual representation of the network (46) based upon the positional information, the network performance data, and node operation parameters,
collecting data representative of one or more operating parameters related to node operation including battery life information that is distinct from the network performance data reported by the nodes, wherein the network performance data includes received radio signal strengths over the assigned message links (L1 to L10) between neighboring nodes; and
generating the visual representation of the network (46) is further based on an icon representing each node, wherein each icon is positioned in the visual representation to show, based upon the positional information related to the node represented by the icon, a physical location of the node represented by the icon, and lines connecting the icons representing the assigned message links (L1 to L10) between the nodes, wherein the icon representing each node displays information related to the collected node operating parameters including battery life information associated with each node that allows a user to visually inspect battery life status of the plurality of nodes in the wireless mesh network.

2. The method of claim 1 wherein the visual representation includes a representation of the received radio signal strengths from neighboring nodes (20, 22, 24, 26, 28, 30).

3. The method of claim 1 or 2 wherein the network performance data includes the number of messages over the assigned message links.

4. The method of any preceding claim wherein the visual representation is mapped on to a physical layout of an area where the nodes are located.

5. A system (10) comprising:
a wireless mesh network (16) having a plurality of nodes (20, 22, 24, 26, 28, 30) interconnected by a plurality of assigned message links (L1 to L10) for communicating messages through the wireless mesh network;
a gateway (18) for collecting network performance data reported by each of the nodes (20, 22, 24, 26, 28, 30) that includes message route information;
data storage for storing collected network performance data, the node operating parameters and node positional data;
a host computer (12) including an application program for generating a visual network map (50) based upon the network performance data, and the node positional data, wherein the visual network map depicts physical locations of the nodes (20, 22, 24, 26, 28, 30) and includes lines corresponding to the assigned message links (L1 to L10) connecting the nodes (20, 22, 24, 26, 28, 30) to depict assigned message routes between the nodes (20, 22, 24, 26, 28, 30); and
a display for displaying the visual network map (50);
the gateway (18 is adapted to collect operating parameters associated with the nodes including battery life information associated with each node, and wherein the network performance data includes received radio signal strengths over the assigned message links (L1 to L10) between neighboring nodes;
the host computer (12) configured to generate the visual network map based upon node operating parameters and the visual network map depicts locations of operating parameters associated with each of the nodes (20, 22, 24, 26, 28, 30);
and the displayed visual network map (50) displays battery life information associated with each node that allows a user to visually inspect battery status of the plurality of nodes in the wireless mesh network.

6. The system of claim 5 and further comprising:
a plurality of field devices, each field device associated with one of the plurality of nodes (20, 22, 24, 26, 28, 30).

7. The system of claim 6 wherein the host computer (12) is configured to send messages and to receive messages from the field devices through the gateway (18) and the wireless mesh network (16).

8. The system of claims 5 to 7 wherein the application program dynamically updates the visual network map (50).

9. The system of claims 5 to 8 wherein the visual network map (50) includes a layout of a physical plant in which at least some of the nodes (20, 22, 24, 26, 28, 30) are received.

10. The system of claims 5 to 9 wherein the visual network map depicts the received radio signal strengths over wireless links (L1 to L10) between neighboring nodes (20, 22, 24, 26, 28, 30).

11. The system of claims 5 to 10 wherein the network performance data includes at least one of: lost messages, and number of messages over links (L1 to L10) between nodes (20, 22, 24, 26, 28, 30).

## Patentansprüche

1. Verfahren zur Überwachung eines Betriebs eines drahtlosen Maschennetzwerks (16) mit mehreren Knoten (20, 22, 24, 26, 28, 30), die durch mehrere zugewiesene Nachrichtenverbindungen (L1 bis L10) miteinander verbunden sind, wobei das Verfahren Folgendes umfasst:
Sammeln von Positionsinformationen (42) in Bezug auf jeden der Knoten (20, 22, 24, 26, 28, 30);
Sammeln von Netzwerkleistungsdaten (44), die von jedem der Knoten (20, 22, 24, 26, 28, 30) gemeldet werden; und
Erzeugen einer visuellen Darstellung des Netzwerks (46) auf der Basis der Positionsinformationen, der Netzwerkleistungsdaten und von Knotenbetriebsparametern,
Sammeln von Daten, die für einen oder mehrere Betriebsparameter in Bezug auf einen Knotenbetrieb, einschließlich Batterielebensdauerinformationen, repräsentativ sind, die sich von den Netzwerkleistungsdaten, die von den Knoten gemeldet werden, unterscheiden, wobei die Netzwerkleistungsdaten empfangene Funksignalstärken über die zugewiesenen Nachrichtenverbindungen (L1 bis L10) zwischen benachbarten Knoten beinhalten; und
wobei das Erzeugen der visuellen Darstellung des Netzwerks (46) weiterhin auf einem Symbol, das jeden Knoten darstellt, basiert, wobei jedes Symbol in der visuellen Darstellung positioniert ist, um auf der Basis der Positionsinformationen in Bezug auf den Knoten, der von dem Symbol dargestellt wird, einen physischen Ort des Knotens, der von dem Symbol dargestellt wird, und Linien, die die Symbole verbinden und die die zugewiesenen Nachrichtenverbindungen (L1 bis L10) zwischen den Knoten zu zeigen, wobei das Symbol, das jeden Knoten darstellt, Informationen in Bezug auf die gesammelten Knotenbetriebsparameter, einschließlich Batterielebensdauerinformationen, die mit jedem Knoten assoziiert sind, anzeigt, die einem Benutzer ermöglichen, einen Batterielebensdauerstatus der mehreren Knoten in dem drahtlosen Maschennetzwerk visuell zu prüfen.

2. Verfahren nach Anspruch 1, wobei die visuelle Darstellung eine Darstellung der empfangenen Funksignalstärken von benachbarten Knoten (20, 22, 24, 26, 28, 30) beinhaltet.

3. Verfahren nach Anspruch 1 oder 2, wobei die Netzwerkleistungsdaten die Anzahl von Nachrichten über die zugewiesenen Nachrichtenverbindungen beinhalten.

4. Verfahren nach einem vorhergehenden Anspruch, wobei die visuelle Darstellung auf ein physisches Layout eines Bereichs, in dem die Knoten sich befinden, abgebildet wird.

5. System (10), umfassend:
ein drahtloses Maschennetzwerk (16) mit mehreren Knoten (20, 22, 24, 26, 28, 30), die durch mehrere zugewiesene Nachrichtenverbindungen (L1 bis L10) zum Übermitteln von Nachrichten durch das drahtlose Maschennetzwerk miteinander verbunden sind;
ein Gateway (18) zum Sammeln von Netzwerkleistungsdaten, die von jedem der Knoten (20, 22, 24, 26, 28, 30) gemeldet werden und die Nachrichtenrouteninformationen beinhalten;
Datenspeicher zum Speichern von gesammelten Netzwerkleistungsdaten, der Knotenbetriebsparameter und von Knotenpositionsdaten;
einen Host-Computer (12), der ein Anwendungsprogramm zum Erzeugen einer visuellen Netzwerkkarte (50) auf der Basis der Netzwerkleistungsdaten und der Knotenpositionsdaten beinhaltet, wobei die visuelle Netzwerkkarte physische Orte der Knoten (20, 22, 24, 26, 28, 30) bildlich darstellt und Linien beinhaltet, die den zugewiesenen Nachrichtenverbindungen (L1 bis L10) entsprechen, die die Knoten (20, 22, 24, 26, 28, 30) verbinden, um zugewiesene Nachrichtenrouten zwischen den Knoten (20, 22, 24, 26, 28, 30) bildlich darzustellen; und
eine Anzeige zum Anzeigen der visuellen Netzwerkkarte (50);
wobei das Gateway (18) dazu eingerichtet ist, Betriebsparameter, die mit den Knoten assoziiert sind, einschließlich Batterielebensdauerinformationen, die mit jedem Knoten assoziiert sind, zu sammeln, und wobei die Netzwerkleistungsdaten empfangene Funksignalstärken über die zugewiesenen Nachrichtenverbindungen (L1 bis L10) zwischen benachbarten Knoten beinhalten;
der Host-Computer (12) dazu konfiguriert ist, die visuelle Netzwerkkarte auf der Basis von Knotenbetriebsparametern zu erzeugen, und die visuelle Netzwerkkarte Orte von Betriebsparametern, die mit jedem der Knoten (20, 22, 24, 26, 28, 30) assoziiert sind, bildlich darstellt;
und die angezeigte visuelle Netzwerkkarte (50) Batterielebensdauerinformationen, die mit jedem Knoten assoziiert sind, anzeigt, die einem Benutzer ermöglichen, einen Batteriestatus der mehreren Knoten in dem drahtlosen Maschennetzwerk visuell zu prüfen.

6. System nach Anspruch 5 und weiterhin umfassend:
mehrere Feldvorrichtungen, wobei jede Feldvorrichtung mit einem der mehreren Knoten (20, 22, 24, 26, 28, 30) assoziiert ist.

7. System nach Anspruch 6, wobei der Host-Computer (12) dazu konfiguriert ist, Nachrichten zu senden und Nachrichten von den Feldvorrichtungen durch das Gateway (18) und das drahtlose Maschennetzwerk (16) zu empfangen.

8. System nach den Ansprüchen 5 bis 7, wobei das Anwendungsprogramm die visuelle Netzwerkkarte (50) dynamisch aktualisiert.

9. System nach den Ansprüchen 5 bis 8, wobei die visuelle Netzwerkkarte (50) ein Layout einer physischen Anlage beinhaltet, in der mindestens einige der Knoten (20, 22, 24, 26, 28, 30) empfangen werden.

10. System nach den Ansprüchen 5 bis 9, wobei die visuelle Netzwerkkarte die empfangenen Funksignalstärken über drahtlose Verbindungen (L1 bis L10) zwischen benachbarten Knoten (20, 22, 24, 26, 28, 30) bildlich darstellt.

11. System nach den Ansprüchen 5 bis 10, wobei die Netzwerkleistungsdaten mindestens eine der folgenden beinhalten: verloren gegangene Nachrichten und Anzahl von Nachrichten über Verbindungen (L1 bis L10) zwischen Knoten (20, 22, 24, 26, 28, 30).

## Revendications

1. Procédé de surveillance du fonctionnement d'un réseau maillé sans fil (16) ayant une pluralité de noeuds (20, 22, 24, 26, 28, 30) interconnectés par une pluralité de liens de message attribués (L1 à L10), le procédé comprenant :
le fait de collecter des informations positionnelles (42) relatives à chacun des noeuds (20, 22, 24, 26, 28, 30) ;
le fait de collecter des données de performance de réseau (44) rapportées par chacun des noeuds (20, 22, 24, 26, 28, 30) ; et
le fait de générer une représentation visuelle du réseau (46) basée sur les informations positionnelles, les données de performance de réseau et des paramètres de fonctionnement de noeud,
le fait de collecter des données représentatives d'un ou plusieurs paramètres opératoires relatifs au fonctionnement du noeud incluant des informations de longévité de batterie qui sont distinctes des données de performance de réseau rapportées par les noeuds, dans lequel les données de performance de réseau incluent des intensités de signaux radio reçus sur les liens de message attribués (L1 à L10) entre des noeuds avoisinants ; et
le fait de générer la représentation visuelle du réseau (46) est basé en outre sur une icône représentant chaque noeud, dans lequel chaque icône est positionnée dans la représentation visuelle afin de montrer, sur la base des informations positionnelles relatives au noeud représenté par l'icône, une localisation physique du noeud représenté par l'icône, et des lignes connectant les icônes représentant les liens de message attribués (L1 à L10) entre les noeuds, dans lequel l'icône représentant chaque noeud affiche des informations relatives aux paramètres opératoires de noeud collectés incluant des informations de longévité de batterie associées à chaque noeud qui permettent à un utilisateur d'inspecter visuellement un statut de longévité de batterie parmi la pluralité de noeuds dans le réseau maillé sans fil.

2. Procédé de la revendication 1, dans lequel la représentation visuelle inclut une représentation des intensités de signaux radio reçus à partir de noeuds avoisinants (20, 22, 24, 26, 28, 30).

3. Procédé de la revendication 1 ou 2, dans lequel les données de performance de réseau incluent le nombre de messages sur les liens de message attribués.

4. Procédé d'une quelconque revendication précédente, dans lequel la représentation visuelle est mappée à un agencement physique d'une aire où les noeuds sont localisés.

5. Système (10) comprenant :
un réseau maillé sans fil (16) ayant une pluralité de noeuds (20, 22, 24, 26, 28, 30) interconnectés par une pluralité de liens de message attribués (L1 à L10) pour communiquer des messages par l'intermédiaire du réseau maillé sans fil ;
une passerelle (18) pour collecter des données de performance de réseau rapportées par chacun des noeuds (20, 22, 24, 26, 28, 30) qui incluent des informations de trajet de message ;
un stockage de données pour stocker des données de performance de réseau collectées, les paramètres opératoires de noeud et des données positionnelles de noeud ;
un ordinateur hôte (12) incluant un programme d'application pour générer une carte de réseau visuelle (50) basée sur les données de performance de réseau, et les données positionnelles de noeud, dans lequel la carte de réseau visuelle décrit des localisations physiques des noeuds (20, 22, 24, 26, 28, 30) et inclut des lignes correspondant aux liens de message attribués (L1 à L10) connectant les noeuds (20, 22, 24, 26, 28, 30) pour décrire des trajets de message attribués entre les noeuds (20, 22, 24, 26, 28, 30) ; et
un afficheur pour afficher la carte de réseau visuelle (50) ;
la passerelle (18) est conçue pour collecter des paramètres opératoires associés aux noeuds incluant des informations de longévité de batterie associées à chaque noeud, et dans lequel les données de performance de réseau incluent des intensités de signaux radio reçus sur les liens de message attribués (L1 à L10) entre des noeuds avoisinants ;
l'ordinateur hôte (12) étant configuré pour générer la carte de réseau visuelle sur la base des paramètres opératoires du noeud, et la carte de réseau visuelle décrivant des localisations de paramètres opératoires associés à chacun des noeuds (20, 22, 24, 26, 28, 30) ;
et la carte de réseau visuelle affichée (50) affiche des informations de longévité de batterie associées à chaque noeud qui permettent à un utilisateur d'inspecter visuellement le statut de batterie de la pluralité de noeuds dans le réseau maillé sans fil.

6. Système de la revendications 5 et comprenant en outre :
une pluralité de dispositifs sur le terrain, chaque dispositif sur le terrain étant associé à un noeud parmi la pluralité de noeuds (20, 22, 24, 26, 28, 30).

7. Système de la revendication 6, dans lequel l'ordinateur hôte (12) est configuré pour envoyer des messages et pour recevoir des messages à partir des dispositifs sur le terrain par l'intermédiaire de la passerelle (18) et du réseau maillé sans fil (16).

8. Système des revendications 5 à 7, dans lequel le programme d'applications met dynamiquement à jour la carte de réseau visuelle (50).

9. Système des revendications 5 à 8, dans lequel la carte de réseau visuelle (50) inclut un agencement d'une installation physique dans laquelle au moins certains des noeuds (20, 22, 24, 26, 28, 30) sont reçus.

10. Système des revendications 5 à 9, dans lequel la carte de réseau visuelle décrit les intensités de signaux radio reçus sur des liens sans fil (L1 à L10) entre des noeuds avoisinants (20, 22, 24, 26, 28, 30).

11. Système des revendications 5 à 10, dans lequel les données de performance de réseau incluent au moins un élément parmi : des messages perdus, et un nombre de messages sur des liens (L1 à L10) entre des noeuds (20, 22, 24, 26, 28, 30).
